# EUROPÄISCHE PATENTSCHRIFT

(11) **EP 1 338 070 B1**
(45) Veröffentlichungstag und Bekanntmachung des Hinweises auf die Patenterteilung: **13.10.2010**
(21) Anmeldenummer: 01980532.4
(22) Anmeldetag: 30.10.2001
(51) Int. Cl.: H02J 5/00

(54) **STEUER- UND VERSORGUNGSSYSTEM**
CONTROL AND SUPPLY SYSTEM
SYSTEME DE COMMANDE ET D'ALIMENTATION

(30) Priorität: 30.10.2000 DE 20018560 U
(43) Veröffentlichungstag der Anmeldung: 27.08.2003
(73) Patentinhaber: Cameron International Corporation, Houston, TX 77027-9109 (US)
(72) Erfinder: BIESTER, Klaus, 29342 Wienhausen (DE); KUNOW, Peter, 12355 Berlin (DE)
(74) Vertreter: Grünecker, Kinkeldey, Stockmair & Schwanhäusser Anwaltssozietät
(86) Internationale Anmeldenummer: PCT/EP2001/012547
(87) Internationale Veröffentlichungsnummer: WO 2002/037640

(56) Entgegenhaltungen:
- EP-A- 0 028 296
- WO-A-01/84689
- WO-A-99/37009
- US-A- 3 887 898

## Beschreibung

Die Erfindung betrifft ein Steuer- und Versorgungssystem für elektrische Einrichtungen mit wenigstens einer Spannungsversorgungs- und Steuereinrichtung oberhalb des Meeresspiegels, einem diese und die elektrischen Einrichtungen verbindenden Unterwasserkabel und einer den elektrischen Einrichtungen im Wesentlichen vor Ort zugeordneten Steuer- und Betätigungseinrichtung.

Solche Steuer- und Versorgungssysteme sind beispielsweise bei der Erdgas- oder Erdölgewinnung im Einsatz. Dabei kann der Einsatz sowohl bei terrestrischen als auch maritimen Bohrungen erFolgen.

Bei maritimen Bohrungen ist ein Teil des Steuer- und Versorgungssystems auf einer Plattform oberhalb des Meeresspiegels angeordnet. Dieser Teil ist insbesondere eine Spannungsversorgungs- und Steuereinrichtung. Diese ist mittels eines Unterwasserkabels mit der Steuer- und Betätigungseinrichtung unterhalb des Meeresspiegels oder auch auf dem Meeresgrund verbunden. Über entsprechende Verbindungsleitungen ist die Steuer- und Betätigungseinrichtung mit verschiedenen elektrischen Einrichtungen, wie Motoren, elektrischen Aktuatoren und dergleichen verbunden.

Bei einem solchen aus der Praxis bekannten Steuer- und Versorgungssystem wird über ein Unterwasserkabel Wechselspannung übertragen, wobei Amplitude und Frequenz der Wechselspannung bereits so ausgewählt sind, dass beispielsweise am den elektrischen Einrichtungen zugeordneten Kabelende eine entsprechende Versorgungsspannung für die Einrichtungen anliegt. Zur direkten Steuerung einer jeden Einrichtung kann entsprechend für jede Einrichtung ein separates Unterwasserkabel vorgesehen sein. Die Datenübertragung erfolgt ebenfalls über separate Unterwasserkabel.

Nachteilig bei diesem vorbekannten Steuer- und Versorgungssystem ist, dass beispielsweise für eine Versorgung einer elektrischen Einrichtung mit 240 V AC und bei einer ursprünglichen Spannungseinspeisung von 600 V AC zur Übertragung der entsprechenden Leistung an die elektrischen Einrichtungen und bei beispielsweise einer Länge des Unterwasserkabels von 30 bzw. 50 km ein Querschnitt von 100 bis 200 mm² für das Kabel notwendig ist. Zusätzlich erforderlich sind noch die Datenleitungen, so dass sich ein Unterwasserkabel mit erheblichem Durchmesser ergibt.

Bei dem vorangehenden wurde davon ausgegangen, dass 240 V AC für die elektrischen Einrichtungen ausreichend sind. Allerdings wurde inzwischen festgestellt, dass höhere Spannungen erforderlich sind, um beispielsweise Servomotoren als elektrische Einrichtungen mit erhöhter Leistung betätigen zu können, um beispielsweise beim Verschließen von Ventilen bei der Erdgas- oder Erdölförderung diese in einer Maximalzeit von einer Minute zu schließen. Bei Verwendung solcher mit höherer Spannung versorgten elektrischen Einrichtungen, würde sich der Querschnitt des Unterwasserkabels bei dem bekannten Steuer- und Versorgungssystem noch vergrößern.

Außerdem wurde in der Praxis festgestellt, dass bei Starten eines Servomotors als elektrischer Einrichtung und insbesondere bei Servomotoren mit höherer Leistung selbst bei einem langsamen Startvorgang über das Unterwasserkabel an die Spannungsversorgungs- und Steuereinrichtung eine Rückmeldung in der Art erfolgt, dass der Startvorgang des Servomotors als Kurzschluss am Kabelende gedeutet wird. Dies führt zu einem Abschalten eines gegen Kurzschluss automatisch geschützten Systems.

Des Weiteren ergibt sich bei dem bisher beschriebenen Steuer- und Versorgungssystem nur eine Effektivität des Gesamtsystems von 27 % gemessen bezüglich der Ausgangsleistung.

Bei einem weiteren aus der Praxis bekannten Steuer- und Versorgungssystem erfolgt ebenfalls eine Übertragung von Wechselspannung über das Unterwasserkabel. Allerdings wirdbei diesem System eine Wechselspannung von beispielsweise 10000 V AC über das Unterwasserkabel übertragen und bei der Steuer- und Betätigungseinrichtung auf von den elektrischen Einrichtungen benötigte Spannungswerte durch beispielsweise einen Transformator herabgesetzt. Außerdem müssen eine Reihe von Leistungskondensatoren verwendet werden, um die Spannung nach dem Herabsetzen wieder entsprechend zu glätten. Um bei diesem weiteren bekannten System die Leitungsquerschnitte für das Unterwasserkabel gegebenenfalls reduzieren zu können, wird außerdem noch eine Leistungsfaktorkorrektur durchgeführt, um eine ausreichende Effizienz für das Gesamtsystem zu erhalten. Für diese Korrektur werden weitere Einrichtungen benötigt, die sehr aufwendig und teuer sind.

Allerdings ergibt sich selbst bei vollständigem Ausbau des vorangehend genannten Systems, dass die Effektivität in der Regel geringer als 70 % ist und Querschnittsflächen für eine Leitung des Unterwasserkabels in etwa 16 bzw. 26 mm² bei einer Länge von 30 bzw. 50 km betragen.

US 4,788,448 offenbart eine Spannungsübertragung an Aktuatoren oder dergleichen, ohne dass auch Daten zur Steuerung dieser Aktuatoren über das entsprechende Spannungsversorgungskabel übertragen werden. Ein Spannungsmonitor überwacht die Spannungsausgabe an entsprechenden Anschlüssen und wird dann ein Datensignal zurück an eine Steuereinrichtung schicken, um die Polarität eines Polaritäts-Steuergeräts umzuschalten. Es besteht die Möglichkeit, die Ausrüstung selektiv zu betätigen, wobei ein entsprechendes Unterwasser-Fernsteuerungsmodul mit zwei unterschiedlichen Teilen der Ausrüstung verbunden ist, die dann selektiv zu betätigen sind.

GB 2 332 220 A zeigt ein Unterwasser-Produktionssystem mit einer Installation oberhalb der Meeresoberfläche und einer Versorgungsleitung, die in einer Unterwasserverteilungseinheit endet. Eine Anzahl von Verbindungen verbinden diese mit sogenannten Christmas trees, wobei jeder dieser Christmas trees eine Unterwassersteuereinrichtung aufweist, die mit einem Kabel mit Aktuatoren, Drosseln, Transducern oder gleichen verbunden ist. Von der Installation oberhalb des Meeresspiegels wird eine hohe Wechselspannung übertragen, die später in eine niedrigere Dreiphasenwechselspannung umgesetzt wird.

Der Erfindung liegt die Aufgabe zugrunde, ein Steuer- und Versorgungssystem dahingehend zu verbessern, dass mit geringem Aufwand und mit höherer Effektivität sowie einer besseren Ausnutzbarkeit des Systems Versorgungen über größere Entfernungen möglich sind.

Diese Aufgabe wird durch die Merkmale des Anspruchs 1 gelöst.

Das heißt dass über die langen Unterwasserkabel Gleichspannung übertragen wird, wobei nur an den Enden des Unterwasserkabels jeweils die Umsetzung von Wechselspannung in Gleichspannung bzw. umgekehrt von Gleichspannung in Wechselspannung erfolgt. Bei Gleichspannung und entsprechend Gleichstrom wird über die Unterwasserkabel nur Wirkleistung übertragen und keine Scheinleistung. Das heißt, der Leistungsfaktor ist 1. Aufgrund der Gleichspannungsübertragung entlang des Unterwasserkabels sind selbst bei hohen Spannungen nur geringe Verluste im Vergleich zu einer Übertragung von Wechselspannung bei den vorbekannten Systemen vorhanden.

Weiterhin ergeben sich für die Übertragung von Gleichspannung sehr geringe Querschnitte für eine Leitung des Unterwasserkabels, die nur ein Zehntel oder weniger der Querschnitte zur Übertragung von Wechselspannung betragen.

Durch den DC/DC- bzw. DC/AC-Wandler im Bereich der Steuer- und Betätigungseinrichtung erfolgt dann eine entsprechende Umsetzung der Gleichspannung in für die elektrischen Einrichtungen, wie Motore, Aktuatoren und dergleichen benötigte Gleich- oder Wechselspannungswerte, wie beispielsweise 240 V oder 300 V mit entsprechend benötigter Frequenz.

Das erfindungsgemäße System zeichnet sich daher durch seine Einfachheit und gleichzeitig höhere Effektivität (mindestens 70 %) aus, wobei sich allein durch den erheblich verminderten Querschnitt für die Leitungen des Unterwasserkabels eine erhebliche Kostenersparnis ergibt.

Eine einfache in der Regel auch für andere Anwendungen verwendbare Spannungsquelle für das System kann darin gesehen werden, dass eine Wechselspannungsquelle mit der Spannungsversorgungs- und Steuereinrichtung zur Versorgung mit einer insbesondere dreiphasigen Wechselspannung verbunden ist.

Bei den vorbekannten Systemen ist es ebenfalls möglich, Daten zwischen Spannungsversorgungs- und Steuereinrichtung und Steuer- und Betätigungseinrichtung zu übertragen. In der Regel wird dazu ein separates Kabel verwendet.

Erfindungsgemäß, ergibt sich als Vorteil, dass die Gleichspannungsübertragung entlang des Unterwasserkabels frei von irgendwelchen Hochfrequenzen ist und daher in einfacher Weise direkt der Gleichspannung entsprechende Spannungsfrequenzen zur Datenübertagung aufmodulierbar sind. Dies kann insbesondere dadurch erfolgen, dass die Spannungs- und Steuereinrichtung und die Steuer- und Betätigungseinrichtung jeweils wenigstens eine Datenmodulationseinrichtung aufweisen.

Eine besonders einfache und effektive Art der Dateneinspeisung kann darin erblickt werden, dass die Datenmodulationseinrichtung der Spannungsversorgungs- und Steuereinrichtung dem DC/DC- bzw. AC/DC-Wandler nachgeordnet ist.

Eine entsprechende Eingabe von Information oder Daten kann direkt im Bereich der Datenmodulationseinrichtung über entsprechende Eingabeeinrichtungen erfolgen. Es besteht allerdings ebenfalls die Möglichkeit, dass von einer weiter entfernten Stelle eine entsprechende Daten- und Signaleinspeisung erfolgt. Dazu kann die Spannungs- und Steuereinrichtung mit einer externen Datenübertragungseinrichtung verbunden sein. Durch diese sind die entsprechenden Daten an die Datenmodulationseinrichtung übertragbar oder von dieser empfangbar.

Um in analoger Weise auch im Bereich der Steuer- und Betätigungseinrichtung Daten in einfacher Weise empfangen oder einspeisen zu können, kann die Datenmodulationseinrichtung der Steuer- und Betätigungseinrichtung dem DC/DC- bzw. DC/AC-Wandler vorgeordnet sein.

Auf diese Weise erfolgt die Dateneinspeisung und auch Datenrückgewinnung jeweils von der Gleichspannung her.

Um ein Auftreten zu hoher Ströme und gegebenenfalls eine Beschädigung der entsprechenden elektrischen Einrichtungen insbesondere am Meeresgrund zu verhindern, kann dem DC/DC- bzw. DC/AC-Wandler eine Überstromsteuereinrichtung zugeordnet sein.

Bei einem DC/DC-Wandler am Meeresgrund wird die von der Meeresoberfläche zugeführte hohe Gleichspannung von mehreren 1000 V in entsprechende Gleichspannungen zur Versorgung der einzelnen Einrichtungen am Meeresgrund aufgespalten.

Um sicher zu stellen, dass die elektrischen Einrichtungen mit entsprechenden Spannungswerten versorgt werden, kann der DC/AC-Wandler mit einer Wechselspannungsmesseinrichtung insbesondere mit einem Spannungs-Nebenschlussregler induktiv gekoppelt sein. Durch den Spannungs-Nebenschlussregler kann beispielsweise das System auch vor Betätigung der elektrischen Einrichtungen unter voller Spannung laufen, wobei der Spannungs-Nebenschlussregler die dynamische Lastregulierung übernimmt und dann die Spannung auf entsprechend niedrigere Werte reduziert werden kann.

Durch die induktive Kopplung als weiterem Merkmal der Erfindung ist sichergestellt, dass entsprechende Steckverbindungen oder andere Verbindungen zwischen Unterwasserkabel und elektrischen Einrichtungen nicht mit Gleichspannung betrieben sind. Es ist allgemein bekannt, dass bereits eine geringe Feuchtigkeit für Kontaktflächen zur Übertragung von Gleichspannung gefährlich ist und insbesondere Salzwasser bei Gleichspannung als galvanische Element wirkt und metallische Verbindungsflächen sehr schnell zerstören würde. Um den Aufwand für solche Verbindungen gering zu gestalten, erfolgt die induktive Kopplung unterhalb des Meeresspiegels und die anschließende Weiterleitung der Spannung erfolgt über Wechselspannung, für die die üblichen bekannten maritimen elektrischen Verbinder verwendbar sind.

Durch die Verwendung der üblichen elektrischen Verbinder ist außerdem ermöglicht, dass alle angeschlossenen Teile wieder verwertbar sind und von unterhalb des Meeresspiegel zurückholbar und beispielsweise zu warten und später wieder einsetzbar sind. Gemäß der Erfindung ist eine feste und unlösbare Verbindung zwischen beispielsweise Unterwasserkabel und entsprechende Einrichtungen nicht erforderlich.

Für die induktive Kopplung kann ein Transformator eingesetzt werden, der beispielsweise auch direkt die Umsetzung der Gleichspannung in die für die elektrischen Einrichtungen benötigten Wechselspannungswerte durchführt.

Ein solcher Transformator kann zwei trennbare, im Wesentlichen symmetrische und einander zuweisende Spurenkernhälften aufweisen.

Um über den Luftspalt zwischen den Spulenkernhälften gleichzeitig auch im Bereich des Transformators Daten austauschen zu können, kann jeder Spulenkernhälfte eine Datenmodulationseinrichtung zur Übertragung von Daten zugeordnet sein.

Um sowohl die Umsetzung der Gleichspannung in Wechselspannung sowie zumindest die entsprechenden Datenmodulationseinrichtungen der Spulenkernhälften zu steuern und zu überwachen, kann jeder Spulenkernhälfte eine Kopplungssteuereinrichtung entsprechend zur Steuerung der Datenmodulationseinrichtungen, des DC/AC-Wandlers und/oder der Wechselspannungsmesseinrichtung zugeordnet sein. Von der Wechselspannungsmesseinrichtung kann ebenfalls eine Rückmeldung an die Spannungsversorgungs- und Steuereinrichtung zur Regulierung der Gleichspannung erfolgen, wobei die Rückmeldung über die entsprechenden Kopplungssteuereinrichtungen, Datenmodulationseinrichtungen der Spulenkernhälften, Datenmodulationseinrichtung der Steuer- und Betätigungseinrichtung, Unterwasserkabel und Datenmodulationseinrichtung der Spannungsversorgungs- und Steuereinrichtung erfolgt. Auf diese Weise ist durchgehend ein bidirektionaler Datenaustausch zwischen Spannungsversorgungs- und Steuereinrichtung und Steuer- und Betätigungseinrichtung möglich.

Bei einem einfachen Ausführungsbeispiel ohne weitere Steuereinrichtungen, kann die Wechselspannungsmesseinrichtung mit den elektrischen Einrichtungen zu deren Versorgung verbunden sein.

Um in einfacher Weise durch die Wechselspannungsmesseinrichtung die von dem DC/AC-Wandler abgegebene Wechselspannung zu messen und die elektrischen Einrichtungen mit entsprechenden Spannungswerten zu versorgen, kann die Wechselspannungsmesseinrichtung insbesondere eine Amplitude der Wechselspannung messen.

Vorteilhaft ist es in diesem Zusammenhang, wenn die vom DC/AC-Wandler abgegebene Wechselspannung beispielsweise eine Rechteckwellenspannung ist. Dadurch können die verschiedenen elektrischen Einrichtungen mit einer stabilen Spannung und ausreichender Leistung versorgt werden.

Eine separate Spannungsstabilisierung beispielsweise mittels einer Zener-Diodenanordnung ist aufgrund der erfindungsgemäßen Wechselspannungsmesseinrichtung mit Spannungs-Nebenschlussregler nicht mehr notwendig, da die von dieser Schaltung abgegebene Wechselspannung bereits statisch und dynamisch stabilisiert ist.

Zur Übertragung sowohl der Gleichspannung als auch der elektrischen Signale entlang des Unterwasserkabels kann dieses vorteilhafterweise aus Koaxial-Leitungen gebildet sein. Diese weisen optimale Eigenschaften bezüglich Dämpfung und Immunität bezüglich abgegebenem Rauschen auf und erlauben eine hohe Datenübertragungsrate von zumindest 100 bis 600 kBaud. Weiterhin ist auch einfach eine bidirektionale Übertragung von Daten entlang des Unterwasserkabels durchführbar.

Der Transformator kann so ausgebildet sein, dass der Luftspalt zwischen den beiden Spulenkernhälften beispielsweise höchstens 4 mm oder insbesondere höchstens 2 mm beträgt. Außerdem sind entsprechende Materialien für die Spulenkernhälften verwendbar, die durch insbesondere Meerwasser nicht angreifbar sind, wie Anordnungen von korrisionsresistenten Transformatorstahlblechen oder kunststoffvergossenen magnetischen Pulvermischungen für die entsprechenden Spulenkernmaterialien.

Um auch direkt von den elektrischen Einrichtungen bzw. der Wechselspannungsmesseinrichtung Daten in Richtung Spannungsversorgungs- und Steuereinrichtung übermitteln zu können, kann der Spannungs-Nebenschlussregler bidirektional ausgebildet sein.

Aufgrund der erfindungsgemäßen Verwendung von Gleichspannung bzw. Gleichstrom und dem dadurch möglichen geringen Querschnitt der Leitungen des Unterwasserkabels besteht außerdem die Möglichkeit, dass für jede elektrische Einrichtung eine separate Verbindungsleitung im Unterwasserkabel vorgesehen sein kann. In diesem Zusammenhang ist darauf zu achten, dass eine elektrische Einheit beispielsweise ein einzelner Motor oder ein einzelner Aktuator als auch eine entsprechende Baumstruktur oder Gruppe von elektrischen Motoren, Aktuatoren oder anderen elektrischen Einrichtungen sein kann.

Eine entsprechend einfache Einkopplung von Daten - auch mehrkanalig -, kann dadurch erfolgen, dass das System zur Datenübertragung eine Multiplexereinrichtung aufweist.

Im Folgenden wird ein vorteilhaftes Ausführungsbeispiel der Erfindung anhand der in der Zeichnung beigefügten Figuren näher erläutert.

Es zeigen:
- Fig. 1 a-c: eine Prinzipdarstellung verschiedener Steuer- und Versorgungssysteme in Gegenüberstellung, wobei das erfindungsgemäße Steuer- und Versorgungs- system in Fig. 1 c dargestellt ist;
- Fig. 2: eine Blockschaltbilddarstellung des erfindungsgemäßen Steuer- und Versor- gungssystems nach Fig. 1 c.

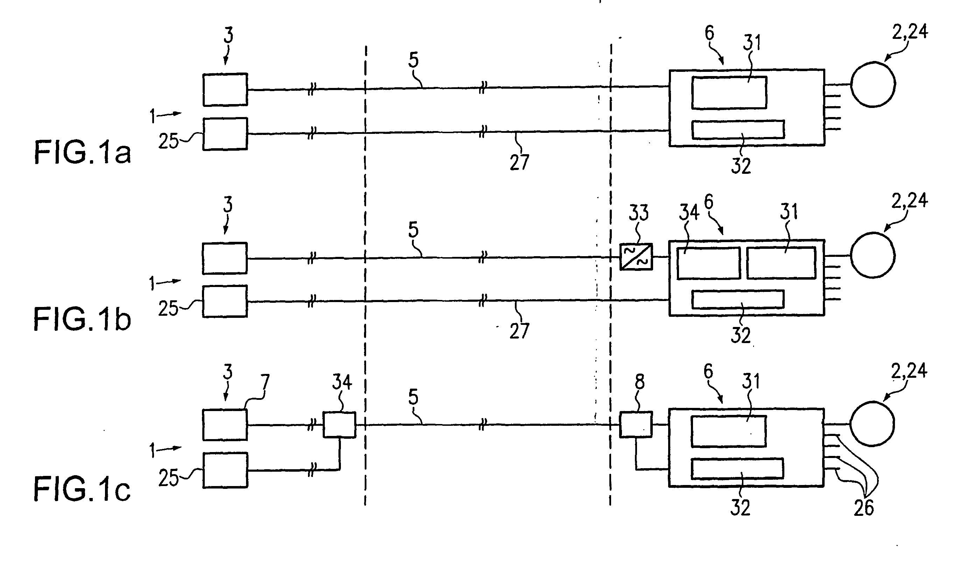

In Fig. 1 sind verschiedene Steuer- und Versorgungssysteme dargestellt, von denen die nach Fig. 1 (a) und (b) aus der Praxis vorbekannt sind.

Bei dem Steuer- und Versorgungssystem nach Fig. 1(a) ist oberhalb eines Meeresspiegels 4 eine Spannungsversorgungs- und Steuereinrichtung 3 mit entsprechender Spannungsquelle und Multiplexereinrichtung 25 angeordnet. Die Spannungsversorgung erfolgt über Wechselspannung, die direkt über ein Unterwasserkabel 5 an eine Steuer- und Betätigungseinrichtung 6 übertragen wird. Diese ist unterhalb des Meeresspiegels angeordnet und über Verbindungsleitungen 26 mit entsprechenden elektrischen Einrichtungen 2 oder elektrischen Einheiten 24 verbunden. Eine solche elektrische Einheit 24 kann durch eine Gruppe von elektrischen Einrichtungen 2 gebildet sein, die beispielsweise in Form einer Baumstruktur angeordnet sind und gemeinsam gesteuert und betätigt werden.

Zur Datenübertragung zwischen Spannungsversorgungs- und Versorgungseinrichtung 3 und Steuer- und Betätigungseinrichtung 6 ist ein Datenkabel 27 vorgesehen. Dieses ist vorzugsweise aus Koaxial-Leitungen zusammengesetzt.

Entlang des Unterwasserkabels 5 wird in der Regel eine Wechselspannung von maximal 600 V AC übertragen. Zur Versorgung der entsprechenden elektrischen Einrichtungen mit 240 V AC und entsprechender Leistung sind Querschnitte für entsprechende Leitungen des Unterwasserkabels für beispielsweise eine Länge von 50 km von mindestens 175 mm² notwendig.

Die Steuer- und Betätigungseinrichtung 6 umfasst dabei zumindest eine Motorbetätigungseinrichtung 31 und ein Steuersystem 32. Die verschiedenen Motoren als elektrische Einrichtungen 2 können dabei zur Betätigung von Ventilen, BOP(Blowout Preventer) und dergleichen dienen, welche Geräte alle für die Erdöl- oder Gasgewinnung am Meeresboden verwendet werden.

Bei dem weiteren vorbekannten Steuer- und Versorgungssystem nach Fig. 1(b) erfolgt ebenfalls eine Übertragung von Wechselspannung entlang des Unterwasserkabels 5. In diesem Fall wird allerdings eine Spannung von maximal 10000 V AC übertragen, die vor der Steuer- und Betätigungseinrichtung 6 durch einen entsprechenden Transformator 33 auf für die elektrischen Einrichtungen benötigte Spannungswerte herabgesetzt wird. Auch bei diesem vorbekannten System ist eine separate Datenleitung 27 als Koaxialkabel oder dergleichen vorgesehen. Die Steuer- und Betätigungseinrichtung 6 nach Fig. 1(b) benötigt aufwendige Leistungskondensatoren 34, um die herabgesetzte Wechselspannung entsprechend zu glätten. Außerdem sind bei diesem System als auch dem System nach Fig. 1(a) Leistungsfaktorkorrektureinrichtungen notwendig, um die Scheinleistung des Systems zu senken. Solche Korrektureinrichtungen sind in der Regel recht aufwendig und bestehen aus Kondensatoren oder dergleichen.

Bei dem System nach Fig. 1(b) ergeben sich für entsprechende Spannungswerte und Leistungen für die elektrischen Einrichtungen am Meeresboden Querschnitte für Leitungen des Unterwasserkabels von beispielsweise mindestens 75 mm² bei 50 km Länge oder mit Leistungsfaktorkorrektur mindestens ein Querschnitt von 26 mm² bei 50 km Länge.

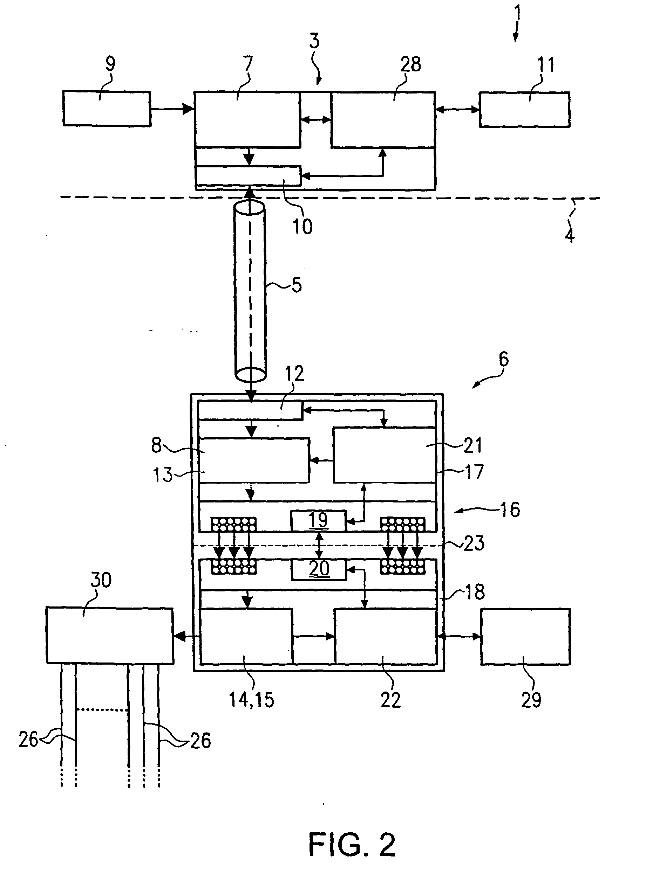

Erfindungsgemäß wird nach Fig. 1(c) nicht Wechselspannung sondern Gleichspannung über das Unterwasserkabel 5 übertragen. Die Spannungsversorgungs- und Steuereinrichtung 3 weist dazu wenigstens einen AC/DC-Wandler 7 auf, der eine entsprechende Wechselspannung einer Wechselspannungsquelle 9, siehe Fig. 2, in Gleichspannung umsetzt. Im Bereich der Steuer- und Betätigungseinrichtung 6 ist analog ein DC/DC- bzw. DC/AC-Wandler 8 zur Umsetzung der Gleichspannung in eine Gleich- oder Wechselspannung vorgesehen. Da erfindungsgemäß eine Gleichspannung über das Unterwasserkabel 5 übertragen wird, erfolgt entsprechend auch keine Übertragung von Hochfrequenzspannungen, so dass in einfacher Weise Signale zur Datenübertragung auf die Gleichspannung aufmodulierbar sind. Dies erfolgt durch die Multiplexereinrichtung 25 und durch einen entsprechenden Kabelkoppler 34. Im Bereich der Steuer- und Betätigungseinrichtung 6 erfolgt entsprechend eine Demodulation der Daten.

Bei Ausbildung des Wandlers 8 als DC/DC-Wandler erfolgt entsprechend eine Umsetzung der hohen, über das Unterwasserkabel 5 übertragenen Gleichspannung in zur Versorgung der entsprechenden Einrichtung am Meeresgrund notwendigen Gleichspannungen. In diesem Zusammenhang ist zu beachten, dass bei einer Gleichspannungsversorgung der Einrichtung auf dem Meeresspiegel ein entsprechender Datenaustausch mit diesen Einrichtungen vereinfacht ist, da entsprechende Datensignale auf das Gleichspannungssignal in einfacher Weise aufmoduliert werden können.

Im Folgenden wird das erfindungsgemäße Steuer- und Versorgungssystem 1 nach Fig. 1(c) im Detail anhand eines Blockdiagramms in Fig. 2 näher beschrieben.

Bei dem erfindungsgemäßen Ausführungsbeispiel des Steuer- und Versorgungssystems 1 nach Fig. 2 ist eine Spannungsversorgungs- und Steuereinrichtung 3 oberhalb eines Meeresspiegels 4 und eine Steuer- und Betätigungseinrichtung 6 unterhalb dieses Meeresspiegels 4 angeordnet. Die Verbindung zwischen beiden erfolgt über ein Unterwasserkabel 5.

Die Spannungsversorgungs- und Steuereinrichtung 3 weist zumindest einen AC/DC-Wandler 7 und eine Datenmodulationseinrichtung 10 auf. Weiterhin ist beiden vorgenannten Einheiten eine Oberflächensteuereinrichtung 28 zugeordnet, durch die sowohl die Steuerung des AC/DC-Wandlers 7 als auch der Datenmodulationseinrichtung 10 erfolgt.

Die Spannungsversorgungs- und Steuereinrichtung 3 ist mit einer Wechselspannungsquelle 9 verbunden, die dreiphasige Wechselspannung bereitstellt. Weiterhin ist die Spannungsversorgungs- und Steuereinrichtung 3 mit einer Datenübertragungseinrichtung 11 verbunden, die entfernt zur Spannungsversorgungs- und Steuereinrichtung 3 angeordnet sein kann, aber noch Teil des Steuer- und Versorgungssystems 1 ist. Durch die Datenübertragungseinrichtung 11 kann die Steuerung des Gesamtsystems wie dessen Überwachung erfolgen.

Die zwischen den verschiedenen Einheiten des Systems dargestellten Pfeile kennzeichnen durch die Pfeilrichtung eine Übertragung von Spannung bzw. Daten, wobei in der Regel eine bidirektionale Datenübertragung möglich ist.

Die Steuer- und Betätigungseinrichtung 6 ist unterhalb des Meeresspiegels 4 und beispielsweise am Meeresgrund angeordnet. Sie weist eine Datenmodulationseinrichtung 12 zur Demodulation der über das Unterwasserkabel 5 übertragenen Daten aber auch zur Aufmodulation entsprechender Daten auf die über das Unterwasserkabel 5 übertragene Spannung auf, wenn solche Daten in umgekehrter Richtung von der Steuer- und Betätigungseinrichtung 6 zur Spannungsversorgungs- und Steuereinrichtung 3 übertragen werden.

Anschließend an die Datenmodulationseinrichtung 12 weist die Steuer- Betätigungseinrichtung 6 einen DC/AC-Wandler 8 auf. Durch diesen wird die über das Unterwasserkabel 5 übertragene Gleichspannung wieder in entsprechende Wechselspannung umgesetzt. Dem DC/AC-Wandler 8 ist eine Überstromsteuereinrichtung 13 zugeordnet. Anschließend an die Umsetzung der Gleichspannung in Wechselspannung durch den DC/AC-Wandler 8 erfolgt eine induktive Übertragung der Wechselspannung zu einer Wechselspannungsmesseinrichtung 14. Die induktive Übertragung erfolgt durch einen Transformator 16 aus zwei Spulenkernhälften 17, 18. Zwischen diesen ist ein Luftspalt 23 gebildet.

Die Wechselspannungsmesseinrichtung 14 dient zur Bestimmung insbesondere von Amplitudenwerten der Wechselspannung und der Messeinrichtung ist ein Spannungs-Nebenschlussregler 15 zugeordnet. Durch diesen erfolgt entsprechend eine statische und dynamische Stabilisierung der Wechselspannung, wobei der Spannungs-Nebenschlussregler 15 bidirektional ist und zusammen mit der Wechselspannungsmesseinrichtung 14 am Ausgang des Transformators 16 angeordnet ist. Anschließend erfolgt eine Weiterleitung der stabilisierten Wechselspannung an eine unterseeische Spannungsquelle 30, mit der über elektrische Verbindungsleitungen 26 die verschiedenen elektrischen Einrichtungen 2 bzw. Einheiten 24 verbunden sind.

Jede Spulenkernhälfte 17, 18 ist sowohl eine Datenmodulationseinrichtung 19, 20 als auch eine Kopplungssteuereinrichtung 21, 22 zugeordnet. Über die Datenmodulationseinrichtungen 19, 20 erfolgt die Übermittlung von Daten und die Kopplungssteuereinrichtungen 21, 22 dienen zur Steuerung sowohl der verschiedenen Datenmodulationseinrichtungen 12, 19, 20 als auch der Wechselsteuerungsmesseinrichtung 14 mit Spannungs-Nebenschlussregler 15. Weiterhin dienen die Kopplungssteuereinrichtungen 21, 22 zum Austausch von Daten beispielsweise mit der Wechselspannungsmesseinrichtung 14 mit Spannungs-Nebenschlussregler 15 und beispielsweise mit einem unterseeischen Elektronikmodul 29. Dieses Elektronikmodul enthält die entsprechende Elektronik zur Steuerung der verschiedenen Gerätschaften unterhalb des Meeresspiegels und insbesondere am Meeresboden, wie Ventile, Blow-out Preventer, Actuatoren und dergleichen. In der Regel ist die entsprechende Elektronik redundant im Elektronikmodul enthalten.

Im Folgenden wird kurz die Funktionsweise des erfindungsgemäßen Steuer- und Versorgungssystems 1 anhand insbesondere der Fig. 2 beschrieben.

Erfindungsgemäß erfolgt eine Versorgung der Steuer- und Betätigungseinrichtung 6 mit Gleichspannung über das Unterwasserkabel 5. Dabei wird erst am Ende des langen Unterwasserkabels die Gleichspannung wieder durch einen entsprechenden DC/AC-Wandler 8 in Wechselspannung umgesetzt. Oberhalb der Meeresoberfläche wird eine dreiphasige Wechselspannung durch einen AC/DC-Wandler in beispielsweise einer Ausgabespannung von 3000 bis 6000 V umgesetzt. Der Spannungswert hängt von den Leistungsanforderungen des Systems ab.

Anschließend wird die stabile und gefilterte Gleichspannung Koaxial-Leitungen des Unterwasserkabels zugeführt, wobei vorher eine Aufmodulation von Datensignalen über eine entsprechende Datenmodulationseinrichtung, wie ein Modem oder dergleichen erfolgt.

Da Koaxial-Leitungen optimale Eigenschaften im Hinblick auf Dämpfung und elektrischem Rauschen aufweisen, sind hohe Datenübertragungsraten von wenigstens 100 bis 600 kBAUD über eine solche Leitungen möglich.

Am Meeresgrund bzw. unterhalb des Meeresspiegels erfolgt dann eine Demodulation der Datensignale durch eine entsprechende Datenmodulationseinrichtung, wie wiederum ein Modem. Anschließend erfolgt eine Umsetzung der Wechselspannung durch einen DC/AC-Wandler in beispielsweise eine Rechteckwellenspannung von 300 V mit einer Frequenz von 20 kHz. Diese Wechselspannung kann über übliche Verbindungseinrichtungen an die verschiedenen elektrischen Einrichtungen übertragen werden. Es ist nur eine geringe Filterung ohne große Elektrolytkondensatoren erforderlich. Der zur Umsetzung der Wechselspannung des DC/AC-Wandlers auf die entsprechenden Spannungswerte verwendete Transformatoren 16 weist zwei Spulenkernhälften 18; 19 auf, die durch einen Luftspalt getrennt sind. Die Spulenkernhälften weisen einander zu, sind voneinander trennbar und symmetrisch zueinander ausgebildet. Durch diesen Transformator wird die induktive Kopplung erreicht.

Anschließend erfolgt eine Messung der Amplitude der Rechteckwellenspannung durch die Wechselspannungsmesseinrichtung 14, der weiterhin ein Spannungs-Nebenschlussregler 15 zugeordnet ist. Durch diese beiden Einrichtungen im Ausgang des Transformators erfolgt im Wesentlichen eine statische und dynamische Stabilisierung der Ausgabespannung. Entsprechende Verlustleistungen des Transformators sowie der anderen Einrichtungen der Steuer- und Betätigungseinrichtung 6 können durch den Kontakt zum Meerwasser direkt über eine entsprechende Wandung der Einrichtung als Wärme abgegeben werden.

Zur Regulierung der Spannungsversorgung ist eine Datenübertragung von der Messeinrichtung 14 über Datenmodulationseinrichtung 20 und 19 und über die weitere Datenmodulationseinrichtung 12 zurück zur Spannungsversorgung- und Steuereinrichtung 3 möglich.

Durch entsprechende Berechnungen für die benötigten Spannungswerte und Leistungen ergibt sich für das erfindungsgemäße Steuer- und Versorgungssystem ein Leitungsquerschnitt für beispielsweise eine Länge von 50 km des Unterwasserkabels von nur ungefähr 2 mm². Dies ist ein erheblich geringerer Querschnitt als bei den aus der Praxis bekannten Systemen, siehe Fig. 1(a) und (b).

Außerdem sind hohe Datenübertragungsraten aufgrund der einfachen Aufmodulation und Demodulation bezüglich der Gleichspannung und des verwendeten Koaxialkabels möglich. Durch die verwendeten Einrichtungen im erfindungsgemäßen System ergibt sich außerdem eine stabile Versorgungsspannung und eine hohe Zuverlässigkeit des Systems.

## Patentansprüche

1. Steuer- und Versorgungssystem (1) für elektrische Einrichtungen (2) mit wenigstens einer Spannungsversorgungs- und Steuereinrichtung (3) oberhalb des Meeresspiegels (4), einem diese und die elektrischen Einrichtungen (2) verbindenden Unterwasserkabel (5) und einer den elektrischen Einrichtungen (2) im Wesentlichen vor Qrt zugeordneten Steuer- und Betätigungseinrichtung (6), wobei die Spannungsversorgungs- und Steuereinrichtung (3) zur Erzeugung einer Gleichspannung zur Einspeisung in das Unterwasserkabel (5) wenigstens einen AC/CD-Wandler (7) aufweist, der Steuer- und Betätigungseinrichtung (6) zur Umwandlung der über das Unterwasserkabel (5) übertragenen Gleichspannung in eine Gleich- oder Wechselspannung wenigstens ein DC/DC- oder DC/AC-Wandler (8) zugeordnet ist **dadurch gekennzeichnet dass** das Steuer- und Versorgungssystem Einrichtungen aufweist sodass die so erzeugte Spannung zusammen mit Daten über Verbindungsleitungen zu den elektrischen Einrichtungen (2) übertragbar ist, wobei von der Steuer- und Betätigungseinrichtung (6) Daten an die Spannungsversorgungs- und Steuereinrichtung (3) zu deren Steuerung der Spannungsversorgung übertragbar sind.

2. Steuer- und Versorgungssystem nach Anspruch 1, **dadurch gekennzeichnet, dass** eine Wechselspannungsquelle (9) mit der Spannungsversorgungs- und Steuereinrichtung (3) zur Versorgung mit insbesondere einer dreiphasigen Wechselspannung verbunden ist.

3. Steuer- und Versorgungssystem nach Anspruch 1 oder 2, **dadurch gekennzeichnet, dass** die Spannungsversorgungs- und Steuereinrichtung (3) und die Steuer- und Betätigungseinrichtung (6) jeweils wenigstens eine Datenmodulationseinrichtung (10, 12, 19, 20) aufweisen.

4. Steuer- und Versorgungssystem nach einem der vorangehenden Ansprüche, **dadurch gekennzeichnet, dass** die Datenmodulationseinrichtung (10) der Spannungsversorgungs- und Steuereinrichtung (3) dem AC/DC-Wandter (7) nachgeordnet ist.

5. Steuer- und Versorgungssystem nach einem der vorangehenden Ansprüche, **dadurch gekennzeichnet, dass** die Spannungsversorgungs- und Steuereinrichtung (3) mit einer externen Datenübertragungseinrichtung (11) verbunden ist.

6. Steuer- und Versorgungssystem nach einem der vorangehenden Ansprüche, **dadurch gekennzeichnet, dass** die Datenmodulationseinrichtung (12) der Steuer- und Betätigungseinrichtung (6) dem DC/DC- bzw. DC/AC-Wandler (8) nachgeordnet ist.

7. Steuer- und Versorgungssystem nach einem der vorangehenden Ansprüche, **dadurch gekennzeichnet, dass** dem DCIDC- bzw. DC/AC-Wandler (8) eine Überstromsteuereinrichtung (13) zugeordnet ist.

8. Steuer- und Versorgungssystem nach einem der vorangehenden Ansprüche, **dadurch gekennzeichnet, dass** der DC/AC-Wandler (8) mit einer Wechselspannungsmesseinrichtung (14) insbesondere mit einem Spannungsnebenstromregler (15) induktiv gekoppelt ist.

9. Steuer- und Versorgungssystem nach einem der vorangehenden Ansprüche, **dadurch gekennzeichnet, dass** ein Transformator (16) zur induktiven Kopplung zwischen zumindest DC/AC-Wandler (8) und Wechselspannungsmesseinrichtung (14) vorgesehen ist.

10. Steuer- und Versorgungssystem nach einem der vorangehenden Ansprüche, **dadurch gekennzeichnet, dass** der Transformator zwei trennbare, im Wesentlichen symmetrische und einander zuweisende Spulenkernhälften (17, 18) aufweist.

11. Steuer- und Versorgungssystem nach einem der vorangehenden Ansprüche, **dadurch gekennzeichnet, dass** jeder Spulenkernhälfte (17, 18) eine Datenmodulationseinrichtung (19, 20) zur Übertragung von Daten zugeordnet ist.

12. Steuer- und Versorgungssystem nach einem der vorangehenden Ansprüche, **dadurch gekennzeichnet, dass** jeder Spulenkernhälfte (17, 18) eine Kopplungssteuereinrichtung (21, 22) entsprechend zur Steuerung der Datenmodulationseinrichtungen (19, 20) des DC/AC-Wandlers (8) und der Wechselspannungsmesseinrichtung (14) zugeordnet ist.

13. Steuer- und Versorgungssystem nach einem der vorangehenden Ansprüche, **dadurch gekennzeichnet, dass** die Wechselspannungsmesseinrichtung (14) mit den elektrischen Einrichtungen über die Verbindungsleitung (26) verbunden ist.

14. Steuer- und Versorgungssystem nach einem der vorangehenden Ansprüche, **dadurch gekennzeichnet, dass** durch die Wechselspannungsmesseinrichtung (14) insbesondere eine Amplitude der Wechselspannung messbar ist.

15. Steuer- und Versorgungssystem nach einem der vorangehenden Ansprüche, **dadurch gekennzeichnet, dass** die von dem DC/AC-Wandler (8) abgegebene Wechselspannung eine Rechteckwellenspannung ist.

16. Steuer- und Versorgungssystem nach einem der vorangehenden Ansprüche, **dadurch gekennzeichnet, dass** die von der Wechselspannungsmesseinrichtung (14) mit Spannungsnebenschlussregler (15) abgegebene Wechselspannung statisch und dynamisch stabilisiert ist.

17. Steuer- und Versorgungssystem nach einem der vorangehenden Ansprüche, **dadurch gekennzeichnet, dass** die Übertragung von Daten entlang des Unterwasserkabels (5) bidirektional durchführbar ist.

18. Steuer- und Versorgungssystem nach einem der vorangehenden Ansprüche, **dadurch gekennzeichnet, dass** ein Luftspalt (23) zwischen den Spulenkernhälften (17, 18) maximal 4 mm und insbesondere maximal 2 mm breit ist.

19. Steuer- und Versorgungssystem nach einem der vorangehenden Ansprüche, **dadurch gekennzeichnet, dass** der Spannungs-Nebenschlussregler (15) bidirektional ausgebildet ist.

20. Steuer- und Versorgungssystem nach einem der vorangehenden Ansprüche, **dadurch gekennzeichnet, dass** für jede Einheit (24) von elektrischen Einrichtungen (2) eine separate Verbindungsleitung im Unterwasserkabel (5) vorgesehen ist.

21. Steuer- und Versorgungssystem nach einem der vorangehenden Ansprüche, **dadurch gekennzeichnet, dass** das System (1) zur Datenübertragung eine Multiplexereinrichtung (25) aufweist.

## Claims

1. Control and supply system (1) for electrical devices (2) with at least one voltage supply and control system (3) above sea level (4), a sub-sea cable (5) connecting said voltage supply and control device with the electrical devices (2), and a control and actuating device (6) which is associated essentially in-situ with the electrical devices (2), wherein the voltage supply and control device (3) for producing a direct voltage for feeding into the sub-sea cable (5) comprises at least one AC/DC convertor (7), the control and actuating device (6) is associated with at least one DC/DC or DC/AC convertor (4) for converting the direct voltage transmitted by the sub-sea cable (5) into a direct voltage or an alternating voltage, **characterized in that** said control and supply system (1) comprises means such that the voltage generated thereby can be transmitted to the electrical devices (2) together with data via the connecting line, wherein data is transmittable from the control and actuating device (6) to the voltage supply and control devices (3) for the control of the voltage supply.

2. Control and supply system according to Claim 1, **characterized in that** an alternating voltage source (9) is connected to the voltage supply and control device (3) for the supply with especially a three-phase alternating voltage.

3. Control and supply system according to Claim 1 or 2, **characterized in that** the voltage supply and control device (3) and the control and actuation device (6) each comprise at least one data modulation device (10, 12, 19, 20).

4. Control and supply system according to one of the previous claims, **characterized in that** the data modulation device (10) of the voltage supply and control device (3) is positioned after the AC/DC converter (7).

5. Control and supply system according to one of the previous claims, **characterized in that** the voltage supply and control device (3) is connected to an external data transmission device (11).

6. Control and supply system according to one of the previous claims, **characterized in that** the data modulation device (12) of the control and actuation device (6) is positioned after the DC/DC or DC/AC converter (8).

7. Control and supply system according to one of the previous claims, **characterized in that** an overcurrent control device (13) is assigned to the DC/DC or DC/AC converter (8).

8. Control and supply system according to one of the previous claims, **characterized in that** the DC/AC converter (8) is inductively coupled with an alternating voltage measurement device (14) especially with a voltage shunt regulator (15).

9. Control and supply system according to one of the previous claims, **characterized in that** a transformer (16) is provided for inductive coupling between at least DC/AC converter (8) and alternating voltage measurement device (14).

10. Control and supply system according to one of the previous claims, **characterized in that** the transformer comprises two separable coil half-cores (17, 18) which are largely symmetrical and assigned to one another.

11. Control and supply system according to one of the previous claims, **characterized in that** a data modulation device (19, 20) for the transmission of data is assigned to each coil half-core (17, 18).

12. Control and supply system according to one of the previous claims, **characterized in that** a coupling control device (21, 22) appropriate for the control of the data modulation devices (19, 20) of the DC/AC converter (8) and of the alternating voltage measurement device (14) is assigned to each coil half-core (17, 18).

13. Control and supply system according to one of the previous claims, **characterized in that** the alternating voltage measurement device (14) is connected to the electrical devices through the connecting line (26).

14. Control and supply system according to one of the previous claims, **characterized in that** especially an amplitude of the alternating voltage can be measured by the alternating voltage measurement device (14).

15. Control and supply system according to one of the previous claims, **characterized in that** the alternating voltage provided by the DC/AC converter (8) is a rectangular wave voltage.

16. Control and supply system according to one of the previous claims, **characterized in that** the alternating voltage provided by the alternating voltage measurement device (14) with the voltage shunt regulator (15) is statically and dynamically stabilised.

17. Control and supply system according to one of the previous claims, **characterized in that** the transmission of data along the subsea cable (5) can be carried out bidirectionally.

18. Control and supply system according to one of the previous claims, **characterized in that** an air gap (23) between the coil half-cores (17, 18) is a maximum of 4 mm and especially a maximum of 2 mm wide.

19. Control and supply system according to one of the previous claims, **characterized in that** the voltage shunt regulator (15) is formed bidirectionally.

20. Control and supply system according to one of the previous claims, **characterized in that** a separate connecting line is provided in the subsea cable (5) for each unit (24) of electrical devices (2).

21. Control and supply system according to one of the previous claims, **characterized in that** the system (1) comprises a multiplexer device (25) for the data transmission.

## Revendications

1. Système de commande et d'alimentation (1) pour des dispositifs électriques (2), comprenant au moins un dispositif d'alimentation en tension et de commande (3) au-dessus du niveau de la mer (4), un câble sous-marin (5) connectant celui-ci et les dispositifs électriques (2) et un dispositif de commande et d'actionnement (6) affecté sensiblement sur site aux dispositifs électriques (2), dans lequel, pour générer une tension continue pour alimenter le câble sous-marin (5), le dispositif d'alimentation en tension et de commande (3) présente au moins un convertisseur CA/CC (7), au moins un convertisseur CC/CC ou un convertisseur CC/CA (8) est affecté au dispositif de commande et d'actionnement (6) pour convertir la tension continue transmise par le câble sous-marin (5) en tension continue ou alternative, **caractérisé en ce que** le système de commande et d'alimentation présente des dispositifs tels que la tension ainsi générée puisse être transmise, conjointement avec des données, par le biais de lignes de connexion aux dispositifs électriques (2), des données pouvant être transmises du dispositif de commande et d'actionnement (6) au dispositif d'alimentation en tension et de commande (3) pour sa commande d'alimentation en tension.

2. Système de commande et d'alimentation selon la revendication 1, **caractérisé en ce qu'**une source de tension alternative (9) est connectée au dispositif d'alimentation en tension et de commande (3) pour alimenter en particulier avec une tension alternative triphasée.

3. Système de commande et d'alimentation selon la revendication 1 ou 2, **caractérisé en ce que** le dispositif d'alimentation en tension et de commande (3) et le dispositif de commande et d'actionnement (6) présentent respectivement au moins un dispositif de modulation de données (10, 12, 19, 20).

4. Système de commande et d'alimentation selon l'une quelconque des revendications précédentes, **caractérisé en ce que** le dispositif de modulation de
données (10) du dispositif d'alimentation en tension et de commande (3) est aménagé en aval du convertisseur CA/CC (7).

5. Système de commande et d'alimentation selon l'une quelconque des revendications précédentes, **caractérisé en ce que** le dispositif d'alimentation en tension et de commande (3) est connecté à un dispositif de transmission de données externe (11).

6. Système de commande et d'alimentation selon l'une quelconque des revendications précédentes, **caractérisé en ce que** le dispositif de modulation de données (12) du dispositif de commande et d'actionnement (6) est aménagé en aval du convertisseur CC/CC ou du convertisseur CC/CA (8).

7. Système de commande et d'alimentation selon l'une quelconque des revendications précédentes, **caractérisé en ce qu'**un dispositif de commande de surintensité de courant (13) est affecté au convertisseur CC/CC ou au convertisseur CC/CA (8).

8. Système de commande et d'alimentation selon l'une quelconque des revendications précédentes, **caractérisé en ce que** le convertisseur CC/CA (8) est couplé par induction à un dispositif de mesure de tension alternative (14), en particulier à un régulateur de tension de courant en dérivation (15).

9. Système de commande et d'alimentation selon l'une quelconque des revendications précédentes, **caractérisé en ce qu'**il est prévu un transformateur (16) pour le couplage inductif entre le au moins un convertisseur CC/CA (8) et le dispositif de mesure de tension alternative (14).

10. Système de commande et d'alimentation selon l'une quelconque des revendications précédentes, **caractérisé en ce que** le transformateur présente deux moitiés de noyau d'inductance (17, 18) séparables, sensiblement symétriques et tournées l'une vers l'autre.

11. Système de commande et d'alimentation selon l'une quelconque des revendications précédentes, **caractérisé en ce qu'**à chaque moitié de noyau d'inductance (17,18) est affecté un dispositif de modulation de données (19, 20) pour transmettre les données.

12. Système de commande et d'alimentation selon l'une quelconque des revendications précédentes, **caractérisé en ce qu'**à chaque moitié de noyau d'inductance (17, 18) est affecté un dispositif de commande de couplage (21, 22) de manière correspondante pour commander les dispositifs de modulation de données (19, 20) du convertisseur CC/CA (8) et le dispositif de mesure de tension alternative (14).

13. Système de commande et d'alimentation selon l'une quelconque des revendications précédentes, **caractérisé en ce que** le dispositif de mesure de tension alternative (14) est connecté aux dispositifs électriques par le biais de la ligne de connexion (26).

14. Système de commande et d'alimentation selon l'une quelconque des revendications précédentes, **caractérisé en ce que** le dispositif de mesure de tension alternative (14) peut mesurer en particulier une amplitude de la tension alternative.

15. Système de commande et d'alimentation selon l'une quelconque des revendications précédentes, **caractérisé en ce que** la tension alternative délivrée par le convertisseur CC/CA (8) est une tension à ondes rectangulaires.

16. Système de commande et d'alimentation selon l'une quelconque des revendications précédentes, **caractérisé en ce que** la tension alternative délivrée par le dispositif de mesure de tension alternative (14) est stabilisée de manière statique et dynamique avec le régulateur de tension en dérivation (15).

17. Système de commande et d'alimentation selon l'une quelconque des revendications précédentes, **caractérisé en ce que** la transmission de données peut être effectuée de manière bidirectionnelle le long du câble sous-marin (5).

18. Système de commande et d'alimentation selon l'une quelconque des revendications précédentes, **caractérisé en ce qu'**un entrefer (23) entre les moitiés de noyau d'inductance (17,18) a une largeur de 4 mm au plus et en particulier une largeur de 2 mm au plus.

19. Système de commande et d'alimentation selon l'une quelconque des revendications précédentes, **caractérisé en ce que** le régulateur de tension en dérivation (15) est conformé bidirectionnel.

20. Système de commande et d'alimentation selon l'une quelconque des revendications précédentes, **caractérisé en ce que**, pour chaque unité (24) des dispositifs électriques (2), il est prévu une ligne de connexion séparée dans le câble sous-marin (5).

21. Système de commande et d'alimentation selon l'une quelconque des revendications précédentes, **caractérisé en ce que** le système (1) présente un dispositif multiplexeur (25) pour la transmission de données.
